Europäisches Patentamt

European Patent Office

Office européen des brevets

(11) Publication number : **0 509 730 A1**

# (12) EUROPEAN PATENT APPLICATION

(21) Application number : **92303274.2**

(22) Date of filing : **13.04.92**

(51) Int. Cl.$^5$ : **F16H 7/14, F16H 7/02**

(30) Priority : **13.04.91 GB 9107861**

(43) Date of publication of application :
**21.10.92 Bulletin 92/43**

(84) Designated Contracting States :
**BE DE ES FR GB IT**

(71) Applicant : **THE DRUM ENGINEERING COMPANY LIMITED**
**P.O. Box 178 Edward Street Works Tong Street Bradford West Yorkshire BD4 9SH (GB)**

(72) Inventor : **Schmitz, Lothar Peter**
**3A Daleside Grove, Pudsey**
**Leeds, West Yorkshire, LS28 8HE (GB)**

(74) Representative : **W.P. Thompson & Co.**
**Coopers Building, Church Street**
**Liverpool L1 3AB (GB)**

(54) **Belt drive for rotary machine.**

(57)  A belt drive assembly for coupling a rotary machine (52) to a driving shaft, comprising a pair of relatively displaceable metal plates (36,38), the plate (36) being mounted to the rotary machine (52) and the plate (38) carrying a lay-shaft (48) which is coupled to the input shaft (56) of the rotary machine (52) by way of pulleys (50,60) and V-belts (62), whereby adjustment of the relatively displaceable metal plates (36,38) enables adjustment of the V-belt tension. The metal plates (36,38) are mounted in parallel overlapping relationship and are interconnected by bolts (40), the plate (38) being slotted to enable the adjustability therebetween.

Fig 3

EP 0 509 730 A1

The present invention is concerned with a belt drive assembly for use in driving a rotary machine, such as a vehicle mounted rotary compressor.

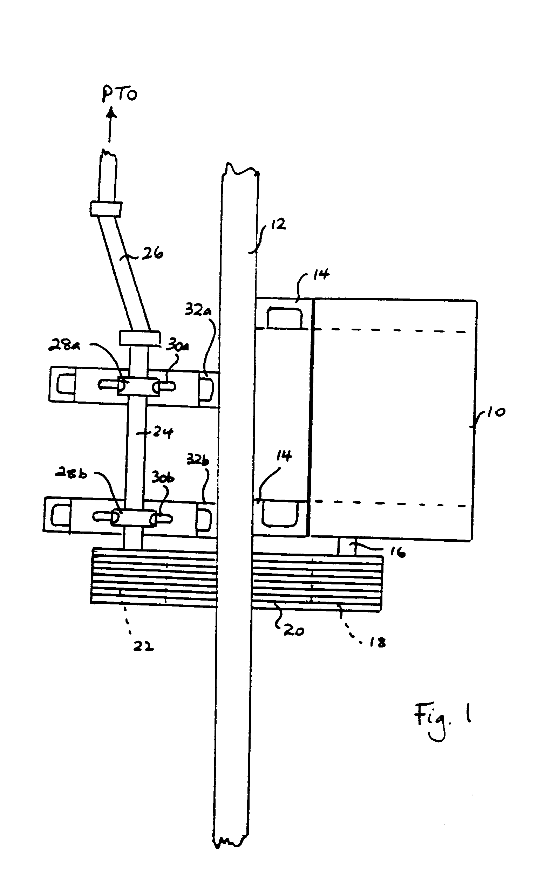

Many road vehicles are fitted with rotary compressors, for the purpose of providing a source of compressed air on the vehicle for use, for example, in discharging product from the vehicle. The traditional means of mounting a compressor on a road vehicle is illustrated diagrammatically in Fig.1 of the accompanying drawings. A rotary compressor 10 is rigidly attached to a chassis rail 12 of the vehicle via channel-shaped brackets 14. The input shaft 16 of the compressor 10 carries a pulley 18, which is coupled via V-belts 20 to a pulley 22 connected to one end of a lay-shaft 24. The lay-shaft 24 is coupled via a propshaft 26 to a power take off (PTO) and is journalled in a pair of plummer blocks 28a,28b which are themselves mounted on slide rails 30a,30b rigidly mounted to the chassis rail 12 via channel-shaped brackets 32a,32b.

With the latter traditional mounting arrangement, the V-belt tension is established by lateral displacement of the lay-shaft 24 and plummer blocks 28 in the slide rails 30. It will be appreciated that this adjustment of the V-belt tension can only be made with the components mounted in situ in their operational positions.

A second major problem with the traditional arrangement is that it relies on the compressor 10 being mounted rigidly relative to the chassis rail 12. This causes noise to be transmitted from the compressor to the chassis and hence to the vehicle generally. It is desirable for the purposes of noise reduction that the compressor should be mechanically isolated from the chassis by supporting it on elastomeric mountings. However, it will be appreciated from Fig.1 that this is not possible with the traditional mounting arrangement. If the brackets 14 were to be replaced by elastomeric mountings, then the V-belt tension could not be maintained and drive would be lost.

A still further problem is that when a compressor or other rotating machine is to be mounted inside an acoustic enclosure for reasons of noise attenuation, it is important that the feet of the machine are acoustically isolated from their mounting supports and the acoustic enclosure to prevent transmission of noise into adjacent structures. This is achieved by fitting the device on flexible mounts, which allow movements of several millimetres in all directions. This, however, prohibits the use of a conventional belt drive of the type shown in Fig.1 where the drive and driven pulley are separately mounted since the force required to tension the belts is such that most of the movement of the flexible mounts would be taken up, thereby rendering them ineffective as sound isolators.

It is an object of the present invention to provide a belt drive assembly which enables belt tension to be established off the vehicle and elastomeric mounting of the compressor on the vehicle chassis and, when desired, the use of an acoustic enclosure.

In accordance with the present invention, there is provided a belt drive assembly for coupling a rotary machine to a driving shaft, the assembly comprising a pair of relatively displaceable members, one of which is mounted to the rotary machine, and the other of which carries a lay-shaft which is coupled to the input shaft of the rotary machine by way of pulleys and V-belts, whereby adjustement of the relatively displaceable members enables adjustement of the V-belt tension.

Preferably, each of the relatively displaceable members comprises a metal plate.

The metal plates are preferably mounted in parallel overlapping relationship and are interconnected by bolts, one of the plates being slotted to enable the adjustability therebetween.

Advantageously, means are provided to enable selective distortion of at least one of the metal plates for the purpose of counteracting distortion brought about in the plates as a result of the belt tension forces to which they are subjected.

The means enabling selective distortion can comprises advantageously a pair of laterally spaced, cantilever beams connected at their one ends to one of the plates and extending substantially perpendicular thereto and screw means for selectively urging the free end regions of the beams together or apart whereby to cause bending of the portion of the metal plate disposed therebetween and thereby to enable correction of any distortion of the paltes and achieve parallelism of the lay shaft and rotary machine shaft.

Preferably, each of the metal plates carries a respective further plate extending substantially perpendicular to it, and at least one of the plates carries a screw means by which the spacing between the plates, and hence the relative overlapping positions of the plates, can be adjusted.

The invention is described further hereinafter, by way of example only, with reference to the accompanying drawings, in which:-

Fig.1 is a diagrammatic plan view illustrating the traditional means of driving a rotary compressor using V-belts;

Fig.2 is a bottom plan view of one embodiment of a belt drive device in accordance with the present invention;

Fig.3 is a longitudinal section on the line A-A in Fig.2;

Fig.4 is a diagrammatic end view illustrating how the belt drive device of Figs. 2 and 3 can be mounted in an inclined attitude;

Fig.5 is an end view of a belt drive device in accordance with the present invention fitted with an acoustic enclosure; and

Figs. 6 and 7 are plan and front views, respectively of the apparatus of Fig.5.

The following description is made in connection with a rotary compressor for a road vehicle, although in principle the belt drive device of the present invention could be applied to a wide variety of rotary machines which are to be belt driven.

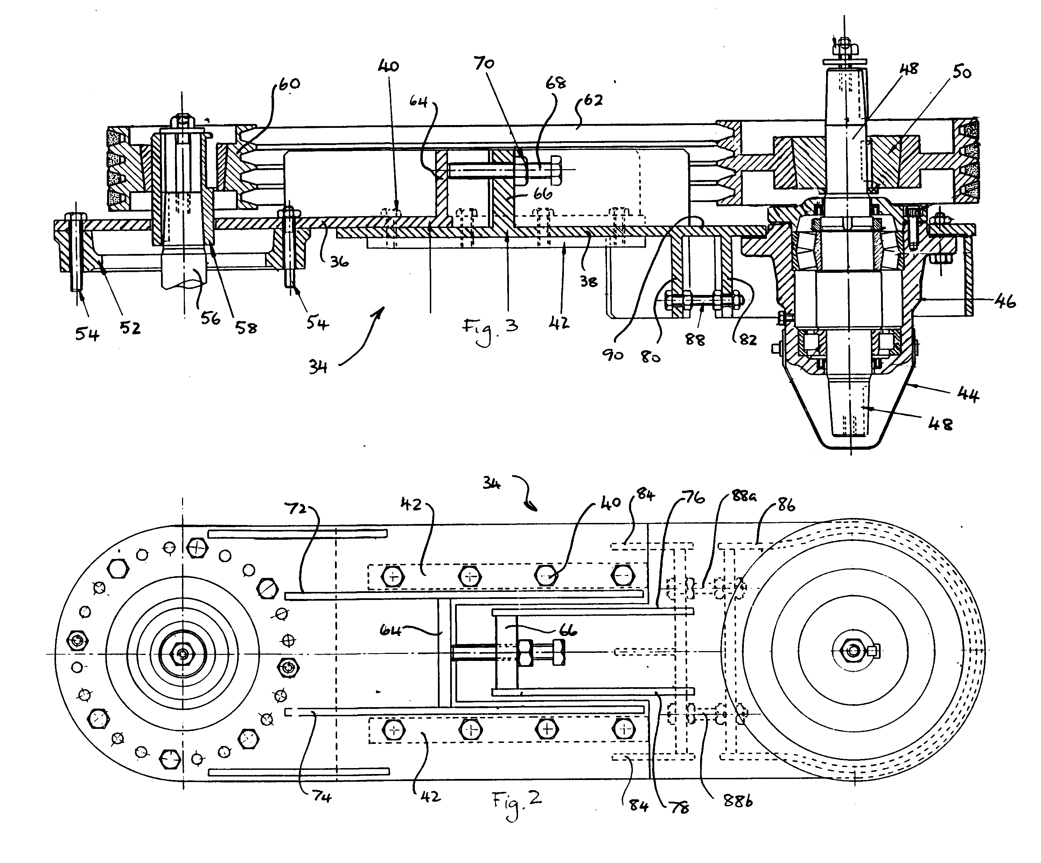

Referring to Figs. 2 and 3, the belt drive device 34 comprises two metal plates 36,38 which are adapted to be clamped rigidly together by means of a plurality (eight in this case) of bolts 40 and two threaded plates 42. The plate 38 is slotted to enable the relative positions of the plates 36,38 to be adjusted. As best seen in Fig.3, the plate 38 carries a bearing device 46 in which there is journalled a lay-shaft 48. The upper end of the lay-shaft, as viewed in Fig.3, is adapted to be coupled directly to a power take off (PTO), possibly via an intermediate propshaft (not shown). The opposite end of the lay-shaft 48 is covered by a guard cup 44. The guard 44 may be removed if it is desired to connect the PTO to this end of the shaft 48.

In this embodiment, the upper end of the shaft (as viewed in Fig.3) also carries a first pulley 50.

The other metal plate 36 is adapted to be connected rigidly to a compressor (only part of which is indicated at 52) by means of bolts 54. The compressor shaft 56 is coupled by means of a sleeve 58 to a second pulley 60, this pulley 60 being coupled to the pulley 50 on the lay-shaft 48 by means of (four) V-belts 62. By adjustment of the relative positions of the two plates 36,38 using the bolts 40, the pulleys 50 and 60 can be moved close enough together to enable the V-belts 62 to be fitted and can then be moved apart to enable the correct belt tension to be established.

The latter adjustment of the plates 36,38 is facilitated by the provision on the plates 36,38 of a pair of parallel beams 64,66 fixed rigidly to the plates 36,38, respectively, so as to extend perpendicularly thereto. An adjusting screw 68 extends through a tapped hole in the plate 66 so that its one end abuts against the other plate 64. Screwing the screw 68 into the plate 66 causes its said one end to engage the other plate 64 and thereby assist in moving the main plates 36,38 apart in a direction to tension the V-belts 62. A locking nut 70 serves to hold the adjusted position of the screw 68. The plate 64 is braced by a further pair of parallel plates 72,74 which are fixed rigidly to the main plate 36 and extend at right angles to the main plate 36 and also to the plate 64. Likewise the plate 66 is braced by a further pair of parallel plates 76,78 which are fixed rigidly to the main plate 38 and extend at right angles to the main plate 38.

In use, the belt tension forces to which the latter assembly is subjected can cause slight distortion of the plates 36,38. In order to counteract this, there is provided on the plate 38 a pair of spaced, parallel beams 80,82 which are strengthened by means of further upstanding members 84,86 respectively. The strengthening member 86 extends right around the end of the main plate 38 carrying the bearing device 46. Bolts 88a, 88b pass through aligned apertures in the beams 80,82 and enable selective bending of the plate 38 in the region 90 between these beams 80,82 until the faces of the two pulleys 50 and 60, monitored with a straight edge, are parallel. By this means, it can be assured that, in addition to the two pulleys being axially aligned, the pulley shafts are parallel.

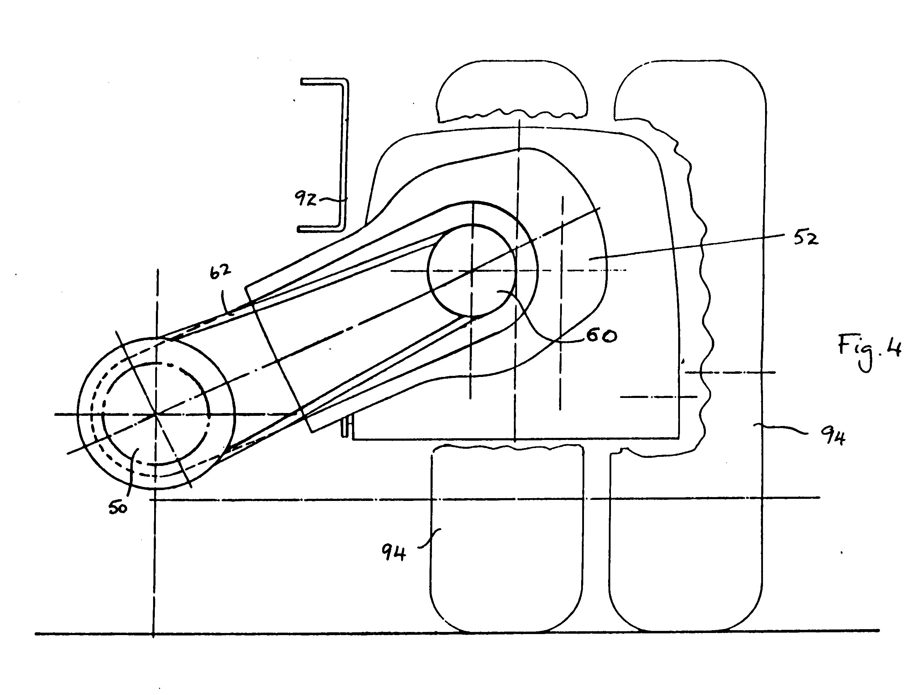

As shown in Fig.4, the above-described arrangement enables the drive belts 62 to be inclined to the horizontal and for the compressor 52 to be mounted outboard of the vehicle chassis 92, between the sets of vehicle wheels 94, whilst still being connected to a propshaft disposed within the chassis. This can provide advantages from the point of view of accessibility and maintenance.

Thus, by virtue of the above described structure, the sub-assembly comprised by the plates 36,38, the lay-shaft 48, pulleys 50,60 and V-belts 62, when bolted to the compressor 52, allows the V-belt tension to be pre-set before the compressor is actually mounted on the vehicle in its operational position.

Furthermore, the compressor 52 (and hence the whole of the sub-assembly) can now be mounted to the chassis by way of elastomeric mountings (not shown in Figs.1 to 4) to achieve noise reduction, since any lateral movement of the compressor is accommodated by the coupling between the lay-shaft 48 and the power take off (P.T.O).

An additional benefit of the self-contained belt drive is its "ready to install" feature, as it is very time consuming for the customer to select, buy and fit the various components which make up a belt drive.

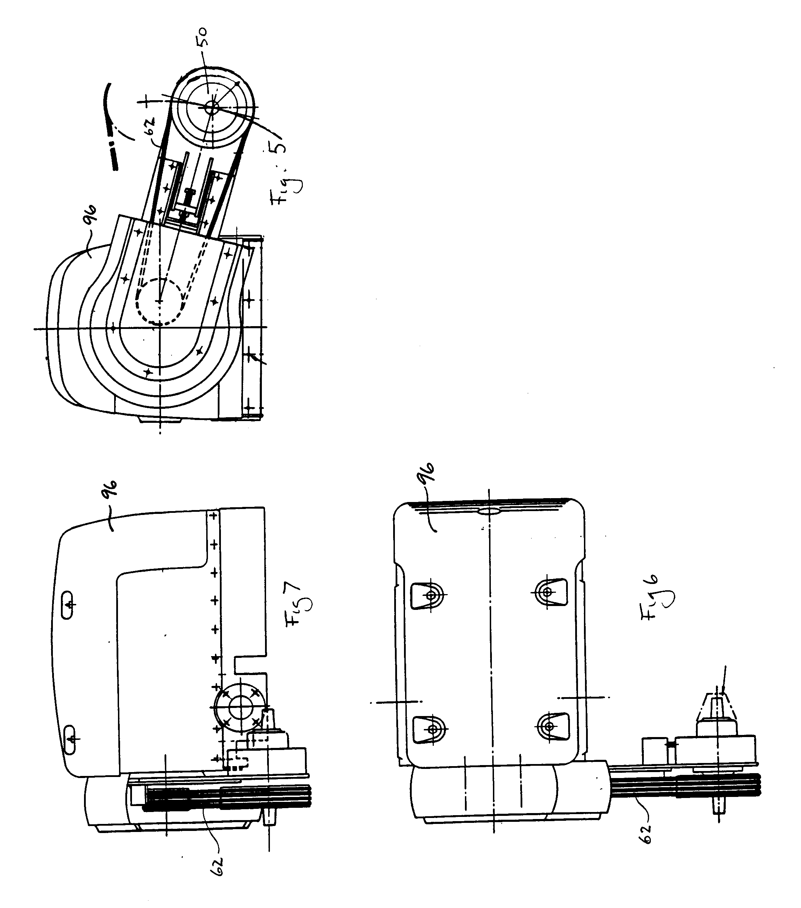

As shown in Figs. 5 to 7, the above-described sub-assembly can now readily be fitted with an acoustic enclosure 96 for purposes of noise attenuation. As described above, the sub-assembly itself is mounted to the chassis by way of elastomeric mountings so that it is de-coupled from the chassis to avoid transmission of noise to the chassis and thence to other adjacent structures. The acoustic enclosure 96 can be mounted to the sub-assembly or, preferably, can be coupled rigidly to the vehicle chassis.

## Claims

1. A belt drive assembly for coupling a rotary machine (52) to a driving shaft, characterised in that the assembly comprises a pair of relatively displaceable members (36,38), one (36) of which is mounted to the rotary machine (52), and the other of which carries a lay-shaft (48) which is coupled to the input shaft (56) of the rotary machine by way of pulleys (50,60) and belts (62), whereby adjustment of the relatively displaceable members (36,38) enables adjustment of the belt tension.

2. An assembly as claimed in claim 1, wherein each of the relatively displaceable members (36,38) comprises a metal plate.

3. An assembly as claimed in claim 2, wherein the metal plates (36,38) are mounted in parallel overlapping relationship and are interconnected by bolts (40), one (38) of the plates being slotted to enable the adjustability therebetween.

4. An assembly as claimed in claim 2 or 3, including means which enable selective distortion of at least one of the metal plates (36,38) for the purpose of counteracting distortion brought about in the plates (36,38) as a result of the operational belt tension forces to which they are subjected.

5. An assembly as claimed in claim 4, wherein the means enabling selective distortion comprises a pair of laterally spaced, cantilever beams (80,82) connected at their one ends to one of the plates (36,38) and extending substantially perpendicular thereto, and screw means (88) for selectively urging the free end regions of the beams (80,82) together or apart whereby to cause bending of the portion (90) of the metal plate (36,38) disposed therebetween and thereby to enable correction of any distortion of the plates (36,38) and achieve parallelism of the lay shaft (48) and rotary machine shaft (56).

6. An assembly as claimed in claim 3, wherein each of the plates (36,38) carries a respective further plate (64,66) extending substantially perpendicular to it, and at least one of the plates (64,66) carries a screw means (68) by which the spacing between the plates (64,66), and hence the relative overlapping positions of the plates (36,38), can be adjusted.

PTO

Fig. 1

Fig. 3

Fig. 2

Fig. 4

Fig. 5

Fig. 7

Fig. 6

European Patent
Office

# EUROPEAN SEARCH REPORT

Application Number

EP     92 30 3274

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | GB-A-2 142 411 (CHAMPION)<br>* page 2 – page 3; figures 2,3 * | 1-3 | F16H7/14<br>F16H7/02 |
| A | | 5 | |
| | --- | | |
| X | US-A-4 631 044 (CHALLANGE TOOL & MANUFACTURING)<br>* abstract; figure 1 * | 1-3 | |
| | ----- | | |

TECHNICAL FIELDS
SEARCHED (Int. Cl.5 )

F16H

The present search report has been drawn up for all claims

| Place of search | Date of completion of the search | Examiner |
|---|---|---|
| THE HAGUE | 04 JUNE 1992 | FLORES E. |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

............................................................
& : member of the same patent family, corresponding
   document

EPO FORM 1503 03.82 (P0401)

9